Europäisches Patentamt

European Patent Office

Office européen des brevets

(11) Publication number: **0 206 524**
A2

## EUROPEAN PATENT APPLICATION

(21) Application number: 86303879.0

(22) Date of filing: 22.05.86

(51) Int. Cl.⁴: **B 01 D 3/20,** C 10 G 7/00

(30) Priority: 29.05.85 US 738716

(43) Date of publication of application: 30.12.86
Bulletin 86/52

(84) Designated Contracting States: BE DE FR GB IT NL

(71) Applicant: **MOBIL OIL CORPORATION, 150 East 42nd
Street, New York New York 10017 (US)**

(72) Inventor: **Silvey, Frank Clark, 18-12 Peasant Hollow
Drive, Plainsboro New Jersey 08536 (US)**

(74) Representative: **West, Alan Harry, Mobil
Court 3 Clements Inn, London WC2A 2EB (GB)**

(54) Chimney to reduce entrainment of droplets of liquid in a vaporous stream.

(57) A process and apparatus for de-entraining liquid droplets
from a vapor stream passing through an opening in a plate (22). A
chimney, comprising a riser (26) and hat (28) defining an annulus
(44) between them, directs vapor flow through two direction
changes of about 180° each. The cross-sectional area of the
annulus is preferably less than that of the cross-sectional area of
the riser, so the momentum imparted to the entrained droplets
drives them down while the vapor continues up. The chimney
may further reduce entrainment by extending the inlet (50) to the
riser below the plate (22) and attaching a lip to the inner wall (29)
of the riser outlet (52) above the plate.

F-3440

## DE-ENTRAINMENT CHIMNEY

This invention relates to a process and apparatus to reduce entrainment of droplets of liquid entrained in a vaporous stream as it leaves a flash zone.

Atmospheric and vacuum distillation columns and product strippers are major processing units in a refinery. Atmospheric or vacuum distillation units separate crude oil into fractions according to boiling point.

In many refineries, crude oil is fractionated at atmospheric pressure. A bottoms stream, from the atmospheric column, sometimes called atmospheric resid, is then charged to a vacuum column. The bottoms stream from atmospheric distillation is also known as topped crude.

The vacuum column separates the atmospheric resid into heavy products, e.g., as light gas oil 216° to 320°C (420 to 610°F), heavy gas oil 320° to 427°C (610° to 800°F), vacuum gas oil, 427° to 566°C (800° to 1050°F), and vacuum resid boiling above 566° (1050°F$^+$). The vacuum resid or vacuum reduced crude leaves the vacuum column as a liquid bottoms stream. Additional information concerning distillation is available in Petroleum Refining Technology and Economics, Gary, J. H. and Handwerk, G. E., pp. 31-51, Marcel Dekker, Inc. (1975).

Vacuum allows distillation of atmospheric resid into fractions at lower temperatures than if the distillation were at atmospheric pressure. The high temperatures otherwise necessary would cause thermal cracking, loss in $C_5^+$ yield due to formation of gas, discoloration of the product, and equipment fouling due to coke formation.

In distillation, lighter hydrocarbons are vaporized and separated from relatively heavier hydrocarbons. Although the heavier hydrocarbons do not vaporize, they may be entrained in the light hydrocarbon vapor.

The entrained heavier hydrocarbons in a vacuum column are typically contaminated with metals, such as vanadium or nickel, which can poison downstream units, such as hydrotreating, hydrocracking, or fluid catalytic cracking units, to which the lighter hydrocarbons are typically fed. Most downstream catalytic processes employ fluid beds or fixed beds of catalyst. If there are metals in the feed to a fixed bed hydrotreater, the bed will plug with metals. Metals deposit in the interstitial space between the catalyst particles, causing the pressure drop to increase. For both fluid and fixed beds, the depositing metals decrease the activity of the catalyst. Therefore, it is desirable to minimize metals in the feed to catalytic processes, especially nickel and vanadium, which may adversely affect catalyst selectivity and life.

The metals enter lighter hydrocarbons, such as gas oil, by two routes: (1) by vaporization, because the organometallic compounds have a finite vapor pressure, although their vapor pressure is extremely low and most of the metallic compounds are in the heaviest fraction of the bottoms; and (2) by liquid entrained with the gas oil vapors. The elimination of entrainment can only eliminate the metals present in the gas oil via the second route. However, because of the low volatility of the metal compounds, reduction of entrainment significantly reduces metals content in the lighter hydrocarbons and improves performance of downstream catalytic units.

In vacuum distillation, the atmospheric resid is usually fed to a flash zone in the lower portion of the vacuum column. To reduce entrainment of residiuum from the flash zone into the lighter hydrocarbons, such as gas oil, a demister or wire mesh pad is frequently installed between the flash zone and a gas oil draw-off. However, the demister or wire mesh pad is not completely satisfactory as:

(1)  entrainment in many cases is not significantly reduced;

(2)  the pads may plug with heavy oil and other material; and

(3)  the pads may corrode, with holes resulting from the corrosion.

Methods other than the demister pads nave been tried to reduce the entrainment of resid into the gas oil, but with only limited success.  Adding a conventional bubble-cap tray above the flash zone causes the vapor to pass through liquid on the bubble-cap tray, thereby allowing vapor to re-entrain liquid droplets.  These re entrained droplets may contain less of the higher boiling components; however, their presence in the vapor stream is deleterious to good fractionation and downstream processing.  The bubble-cap tray causes a pressure drop, increasing the flash zone pressure required to drive the vapor through the bubble-cap tray.  Increased pressure is bad, it necessitates a higher flash zone temperature and prevents a deeper cut distillation.

The buoble-cap could be replaced by a standard chimney tray having a plurality of risers attached to a plate having holes, with a baffle attacned to the top of each riser.  Chimney trays are available which provide two 90° direction changes.  A first 90° direction change when a stream from the riser contacts the baffle, and a second 90° direction change when the stream exits the chimney.  These standard chimneys have a lower pressure drop than bubble-caps; however, they allow significant entrainment.

Liquid entrainment also reduces separation efficiency in other hydrocarbon and non-hydrocarbon services wherein feed entries are flashed.  Typical services include product strippers or towers which are fed a partially vaporized stream.

None of the prior art de-entrainment devices have been completely satisfactory, especially when used in vacuum towers.  A way has now been discovered to achieve even better de-entrainment than can be achieved in a bubble-cap tray, but without the high pressure drop.

Accordingly, the present invention provides a de-entrainment chimney apparatus for a tower plate having a hole therethrough, characterized by a riser for passing a stream comprising vapor and entrained liquid up through the hole, wherein a portion of the riser extends up from the plate and is attached to the plate at the perimeter of the hole, the riser having an inlet connective with the plate and an outlet above the plate; a hat located apart from the riser for downwardly directing vapor from the riser outlet, and comprising a top wall attached to sidewalls, whereina top portion of the riser is within the hat and forms an annulus in open communication with the atmosphere of the tower, the annulus forming a means for passing the vapor stream down from the hat, the cross-sectional area of the annulus being less than the cross-sectional area of the riser to increase the speed of the vapor stream through the annulus relative to its speed through the riser, the hat allowing the vapor portion of the downward stream from the annulus to turn upwardly, thereby de-entraining a major portion of entrained liquid from the stream.

In another embodiment, the present invention provides a fractionation process using the de-entrainment apparatus of the present invention.

Fig. 1 is a cross-section of a tower employing the chimney of the present invention;

Fig. 2 is a top view of a portion of a tower tray employing the chimney of the present invention;

Fig. 3 is a side view of a portion of the tower tray employing the chimney of the present invention;

Fig. 4 is a cross-sectional side view of Fig. 2 along view A-A;

Fig. 5 is a detailed top view of the chimney of the present invention;

Fig. 6 is a cross-sectional side view along view B-B of the chimney of the present invention;

Fig. 7 is the chimney of Fig. 6 and shows the vapor flow path through the chimney; and

Fig. 8 is a portion of a cross-section of the tower employing the chimney of the present invention, wherein the tray is tilted.

Figure 9 is a detailed top view of another embodiment of the chimney of the present invention.

Figure 10 is a side view of the chimney of Figure 9.

Figure 11 is another side view of the chimney of Figure 9.

Figure 12 is a detailed view of a portion of the chimney circled in Figures 10 and 11.

The present invention de-entrainment chimney may be used as a tray above the flash zone of an atmospheric or vacuum distillation tower. The chimney removes droplets entrained in vapor from the flash zone. The de-entrainment device directs vapor flow through two direction changes of about 180° each. A stream of vapor and entrained liquid passes up through the chimney, then is turned down and the entrained liquid droplets continue down while the vapor turns up, thus de-entraining the liquid from the vapor.

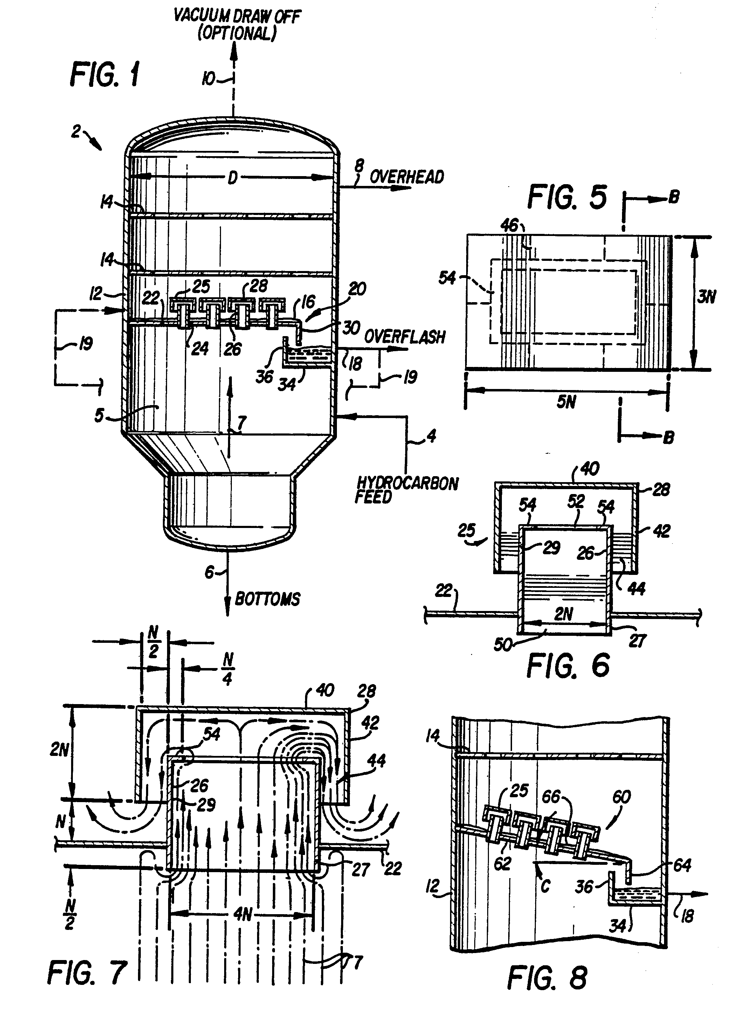

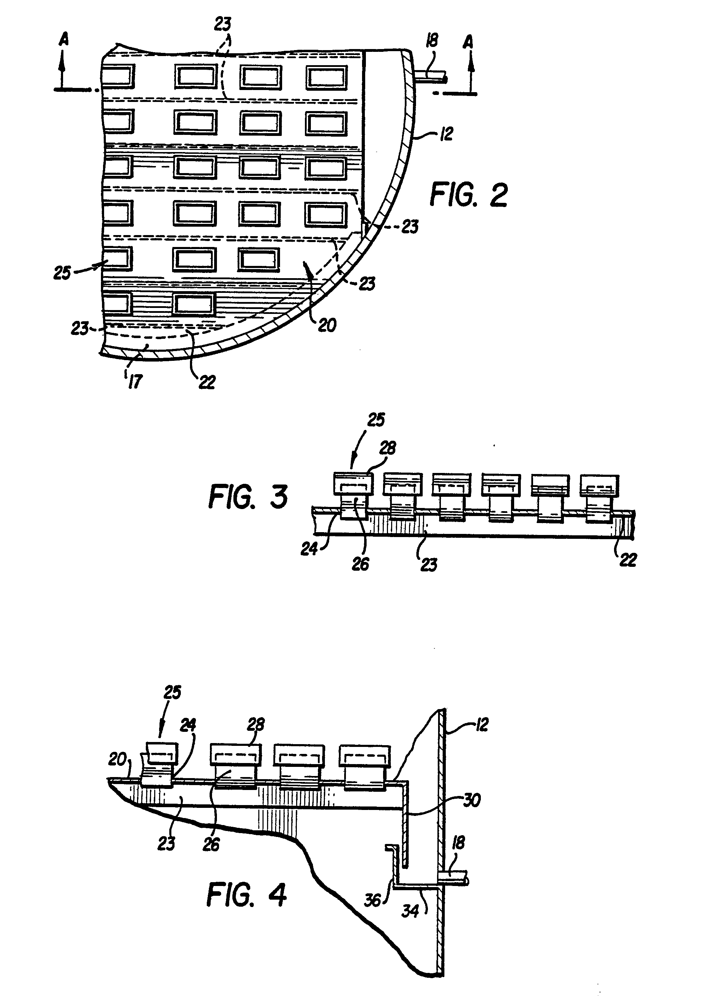

Fig. 1 shows a schematic diagram of a tower 2 employing the present invention. Hydrocarbon feed passes through a conduit 4 into flash zone 5 in the lower portion of the tower 2. Tower 2 separates feed into heavier hydrocarbons, typically vacuum resid, removed via line 6 and lighter hydrocarbons which pass through an overhead conduit 8. Tower 2 may have a vacuum draw-off 10 to operate as a vacuum tower. The invention is also applicable to atmospheric towers and other hydrocarbon and non-hydrocarbon services where feed is flashed, e.g., a catalytic hydrodesulfurization (CHD) product stripper, a carbonate regenerator in a Benfield $CO_2$ removal unit, or other product strippers. Tower 2 may have conventional trays 14 or other conventional tower internals, such as packing (not shown).

The tower 2 has de-entrainment chimney tray 20 above the flash zone 5. Tray 20 has plate 22 with holes 24, each provided with a chimney 25, which includes a riser 26 and a hat 28. The riser 26 is attached to the perimeter of the hole 24. Four chimneys 25 are shown in Fig. 1, but typically more chimneys 25 are employed on the plate 22, as shown in Figs. 2-4. The plate 22 may be attached to sidewalls 12 of the tower 2 by a support ring 17, shown by Fig. 2. Trusses 23 may be attached to the underside of the plate 22 to provide support. The tray 20 is also provided with a downcomer 30 attached to the plate 22, as shown by Fig. 1. Optionally, the tray 30 may be provided with a conduit 19 to recycle a portion of overflash.

As shown in Fig. 8, a tray 60 is provided with de-entrainment chimneys 25, and a plate 62 which may be tilted slightly towards a downcomer 64. Thus, the portion of the plate 62 away from the downcomer 64 is elevated slightly higher than the portion of the plate 62 attached to the downcomer 64. Tilting the plate 62 improves the washing of a liquid layer 66 from the upper surface of the tilted plate 62. The liquid layer 66 includes de-entrained droplets and liquid from the trays 14 (one shown in Fig. 8) located above the tray 60. The plate 62 is tilted by an angle C. Angle C is exaggerated in Fig. 8 to show its detail; however, it is typically less than about 1°. The de-entrainment chimneys 25 are perpendicular to the plate 62.

In Fig. 1, the tower 2 operates under vacuum. Hydrocarbon feed passes through conduit 4 into the flash zone 5. The feed typically boils above 320°C (610°F). The feed flashes in zone 5 to form a hydrocarbon stream 7, typically comprising gas oil vapor and entrained droplets of vacuum reduced crude. Typically, gas oil vapors include light gas oil boiling between 216°-320°C (420° and 610°F), heavy gas oil boiling between 320°-427°C (610° and 800°F) and vacuum gas oil boiling between about 427°-566°C (800° and 1050°F). The vacuum reduced crude has a boiling point above 566°C (1050°F). The vacuum reduced crude, also known as residuum, leaves the tower as bottoms stream 6. The stream 7 passes into riser 26. As shown by Figs. 6-7, the vapor stream 7 passes up into an inlet 50 of riser 26 and exits outlet 52 to contact the hat 28. The hat 28 includes a top wall 40 attached to a sidewall 42. The top wall 40 and sidewall 42 are located a distance from the riser 26. As shown in Fig. 5, supports 46 space the hat 28 from the riser 26. Hat 28 and riser 26 are attached to supports 46.

As best shown in Figures 6 and 7, riser 26 in hat 28 forms an annulus 44 which passes vapor between the riser 26 and the hat 28. The vapor and entrained liquid stream 7 passes up through outlet 52, hat 28 deflects stream 7 through annulus 44 directly into tower 2. The longitudinal axis of riser 26 is preferably parallel to the cap sidewalls 42, so that hat 28 deflects the stream exiting the riser 26 by about 180°.

The cross-sectional area of the annulus 44 is preferably less than the cross-sectional area of the riser 26. Therefore, the stream 7 accelerates when passing through the annulus 44 to increase the momentum of entrained droplets. The momentum of the droplets exiting the annulus 44 propels them onto plate 22, while the vapor is deflected upwardly due to conventional physical forces. The sidewalls 42 are preferably perpendicular to the plate 22, so the direction change after stream 7 exits the annulus 44 is about 180°.

The de-entrained droplets are washed across the upper surface of the plate 22 by wash liquid from, e.g., trays 14 above. The wash liquid, and de-entrained droplets, forms a liquid layer 16 which passes across into the downcomer 30 into a trough formed by a weir 36 attached to a member 34, as shown in Fig. 4. The wash liquid and de-entrained droplets form the overflash which exits the tower 2 through conduit 18. The annulus 44 is above the liquid layer 16 so the vapor stream 7 passes from the annulus 44 directly into the atmosphere of the tower 2 without bubbling through the liquid layer 16, as would vapor exiting a bubble-cap.

Rising flash drum vapor impinges against the plate 22 before entering the risers 26. This de-entrains some liquid. Therefore, the riser 26 may extend below the plate 22 to form an extension 27 that prevents this liquid from being re-entrained up the riser 26. As shown in Fig. 7, the flash drum vapor stream 7 deflects from the plate 22, around the extension 27 and into the riser 26.

Riser 26 may have a lip 54, as shown in Figs. 5-7, which prevents drops of liquid, adhering to an inside wall 29 of the riser 26, from creeping up the wall 29 and being re-entrained into the vapor stream 7 passing through the riser 26.

Figs. 5 and 6 provide typical dimensions for chimney 25. "N" is the inside diameter "D" of the tower 2 divided by 50. Although these ratios are for an embodiment of a commercial-size tower 2, these ratios could vary depending upon tower geometry and difficulty of de-entrainment. For example, the cross-sectional area of the annulus 44 could be varied. The riser 26 and hat 28 shown are rectangular. Other shapes could be used.

The de-entrainment chimney of the present invention is more efficient than a conventional bubble-cap tray. A conventional bubble-cap tray passes vapor through the liquid on the tray, allowing vapor to re-entrain liquid. These re-entrained droplets may contain fewer high boiling point components than the vacuum resid; however, their presence in the vapor stream can be deleterious to good fractionation and contaminate downstream processing. A bubble-cap tray exhibits a pressure drop about three times higher than the de-entrainment chimney tray. The low pressure drop de-entrainment chimney allows a lower flash zone pressure, a deeper distillate cut, or lower flash zone temperature.

The present invention has advantages over a tray having standard chimneys with two 90° direction changes. Although the standard chimney has a somewhat lower pressure drop than the de-entrainment chimney of the present invention, the standard chimney does not remove entrained droplets effectively.

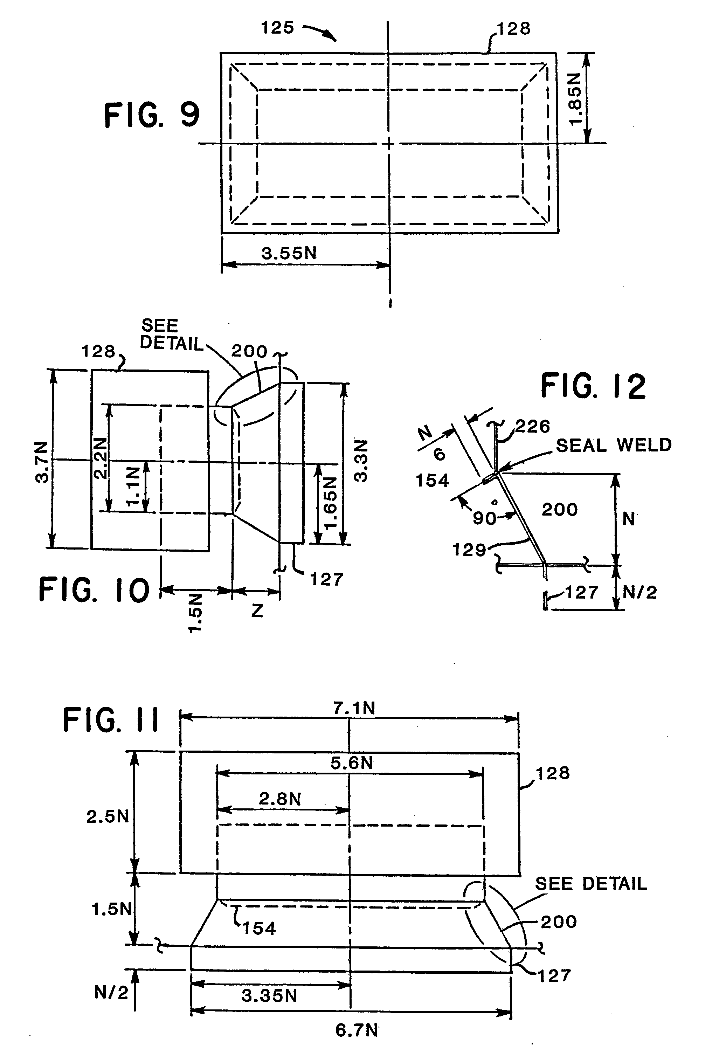

Figures 9-12 show another embodiment of a chimney of the present invention. As seen in these Figures, chimney 125 comprises base 127, reducer 200 and riser 226 beneath hat 128.

Lip 154, as best seen in Figure 12, prevents drops of liquid, adhering to inside wall 129 of reducer section 200 from creeping up the wall and being re-entrained into the vapor stream passing through the riser 226.

The advantage of the configuration of chimney 125, as shown in Figures 9-12, is that a significantly greater portion of the de-entrainment chimney tray can be open space. Almost 50% open tray area or open space can be achieved using the configuration shown in Figures 9-12. This is possible because the cap 128 is only very slightly larger than the base section 127.

In another embodiment, not shown, the de-entrainment chimney can have a substantially circular shape, rather than the rectangular shape shown in the drawings. Figures 10 and 11 also serve equally well as side views of a circular chimney of the present invention.

If Figure 10 represented a circular chimney embodiment, the cross-sectional area of the annulus is slightly more than the inlet area of the base, so there will be less acceleration of gas through the annulus. This will result in slightly lower de-entrainment efficiency.

If Figure 11 represented a de-entrainment chimney of circular cross-sectional area, the annulus cross-sectional area would be less than one-half of the cross-sectional area of the base portion, so the desired gas acceleration through the annulus would be achieved, at the price of somewhat higher pressure drop than in circular chimney embodiment of Figure 10 discussed immediately above.

In Figure 12 inner lip 154 may conveniently be formed by seal welding a lip on the upper portion of reducer 200 to a roughly corresponding lip on the lower portion of riser 226. Preferably, there is a 90° angle between lip 154 and inner wall 129 of reducing section 200. Lip 154 preferably extends a distance n/6 in from the inner wall 129.

F-3440 — 10 — 0206524

CLAIMS:

1.    A de-entrainment chimney apparatus 20 for a tower plate 22 having a hole 24 therethrough, characterized by a riser 26 for passing a stream comprising vapor and entrained liquid up through the hole 24, wherein a portion of the riser extends up from the plate 22 and is attached to the plate 22 at the perimeter of the hole 24, the riser 26 having an inlet 50 connective with the plate and an outlet 52 above the plate; a hat 28 located apart from the riser 26 for downwardly directing vapor from the riser outlet 52, and comprising a top wall attached to sidewalls, wherein a top portion of the riser 26 is within the hat 28 and forms an annulus 44 in open communication with the atmosphere of the tower, the annulus forming a passage for the vapor stream down from the hat 28, the cross-sectional area of the annulus 44 being less than the cross-sectional area of the riser 26 to increase vapor velocity through the annulus 44 relative to vapor velocity through the riser 26, the hat 28 allowing the vapor portion of the downward stream from the annulus 44 to turn up, thereby de-entraining a major portion of entrained liquid from the stream.

2.    The apparatus of Claim 1 further characterized in that the plate 22 has a layer 16 of liquid on its upper surface and the hat 28 is located a distance above the liquid layer 16.

3.    The apparatus of any preceeding claim wherein the riser inlet 50 extends below the plate 22.

4.    The apparatus of any preceeding claim further characterized in that a lip 54 is attached to the inner wall 29 of the riser outlet 52.

5.    The apparatus of any preceeding claim further characterized in that the hat 28 sidewalls 42 are substantially parallel to the longitudinal axis of the riser 26.

6. The apparatus of any preceeding claim further characterized in that the plate 22 is tilted 0-1° from horizontal.

7. The apparatus of any preceeding claim further characterized in that the riser 226 comprises a base 127 and reducer 200 connective with a riser 226 of reduced cross-sectional area.

8. A process for separating entrained liquid droplets from a vapor stream containing entrained liquid droplets comprising passing the vapor stream through the de-entrainment chimney 25, 125 of any preceeding claim.

8684H/0774H

1/3

0206524

**FIG. 1**

VACUUM DRAW OFF (OPTIONAL)

OVERHEAD

HYDROCARBON FEED

OVERFLASH

BOTTOMS

**FIG. 5**

**FIG. 6**

**FIG. 7**

**FIG. 8**

FIG. 2

FIG. 3

FIG. 4

FIG. 9

FIG. 10

FIG. 11

FIG. 12